# EUROPÄISCHE PATENTSCHRIFT

(11) **EP 2 198 244 B1**
(45) Veröffentlichungstag und Bekanntmachung des Hinweises auf die Patenterteilung: **06.06.2012**
(21) Anmeldenummer: 08804038.1
(22) Anmeldetag: 11.09.2008
(51) Int. Cl.: G01C 21/32, G06F 17/30, G09B 29/10

(54) **VERFAHREN ZUM BETRIEB EINES NAVIGATIONSSYSTEMS**
METHOD FOR OPERATING A NAVIGATION SYSTEM
PROCÉDÉ PERMETTANT DE FAIRE FONCTIONNER UN SYSTÈME DE NAVIGATION

(30) Priorität: 08.10.2007 DE 102007048264
(43) Veröffentlichungstag der Anmeldung: 23.06.2010
(73) Patentinhaber: Robert Bosch GmbH, 70442 Stuttgart (DE)
(72) Erfinder: MESCHENMOSER, Reinhard, 30459 Hannover (DE)
(86) Internationale Anmeldenummer: PCT/EP2008/062073
(87) Internationale Veröffentlichungsnummer: WO 2009/047077

(56) Entgegenhaltungen:
- EP-A- 1 785 968
- DE-A1-102005 029 744

## Beschreibung

### Technisches Gebiet

Die Erfindung betrifft ein Verfahren dass bei einer Aktualisierung von Kartendaten zumindest einer Kachel in einer unteren Hierarchieebene die Kachel einer höheren Hierarchieebene die Information bezüglich der höchsten bzw. neuesten Aktualisierungsversion der Kartendaten erhält, mittels welcher zumindest eine Kachel der unteren Hierarchieebene aktualisiert wurde, wobei die zumindest eine Kachel der unteren Ebene eine Information erhält, ob sie auf die Aktualisierungsversion der Kachel der höheren Ebene aktualisiert ist oder nicht, oder dass bei einer Aktualisierung von Kartendaten einer Kachel in einer unteren Hierarchieebene die Kachel der höheren Hierarchieebene die Information bezüglich der Aktualisierungsversion der Kartendaten erhält, mittels welcher die Kachel der unteren Hierarchieebene aktualisiert wurde, wobei die aktualisierte Kachel der unteren Ebene eine Information erhält, dass sie auf die Aktualisierungsversion der Kachel der höheren Ebene aktualisiert wurde und ein Navigationssystem hierzu

### Stand der Technik

Bei Navigationssystemen für Kraftfahrzeuge werden digitale Karten verwendet, beispielsweise um Ziele einzugeben und um mittels einer Zielführung den Fahrer des Fahrzeuges zu einem definierten Ziel zu führen. Die verwendeten digitalen Karten weisen dabei Straßen auf, die durch sogenannte Kanten repräsentiert werden. Solche Kanten bestehen vorzugsweise aus einem Linienelement oder aus einer Mehrzahl von Linienelementen, die beispielsweise geradlinig sein können, wodurch der Verlauf einer Kante dem tatsächlichen Verlauf der Straße angenähert wird. Treffen sich Kanten an einer Kreuzung oder einer Abzweigung, so werden diese Punkte des Zusammentreffens durch so genannte Knoten repräsentiert.

Da sich Straßenverläufe verändern können oder Straßen neu geschaffen werden, ist es wesentlich, die verwendeten Karten auf dem neuesten Stand zu halten und die durch Kanten und Knoten repräsentierte Straßentopologie der Karte zu aktualisieren. Eine Aktualisierung durch drahtlose Verfahren, wie mittels bidirektionaler Kommunikationsnetze, hat den Nachteil, dass die verfügbare Übertragungskapazität nur begrenzt ist und die allgemeine Verfügbarkeit solcher Systeme auch nicht immer gewährleistet ist. Daher ist es notwendig, dass die drahtlose Aktualisierung der Karte nur auf einen aktuell benötigten Bereich der Karte beschränkt wird. Dabei kann es allerdings vorkommen, dass die aktualisierte digitale Karte an der Grenze zwischen einem aktualisierten Bereich und einem nicht aktualisierten Bereich eine Inkonsistenz aufweist. Eine solche Inkonsistenz kann beispielsweise eine neue Strasse sein, die über die Grenze der Bereiche führt und in dem noch nicht aktualisierten Bereich noch nicht enthalten ist und somit dort nicht fortgeführt ist. Wird von einem Navigationssystem nun ein Routenvorschlag über eine solche eine Straße repräsentierende Kante vorgeschlagen, ergeben sich an der Grenze von aktualisierten zu nicht aktualisierten Bereichen Probleme, weil die Straße an der Grenze zwischen aktualisiertem und nicht aktualisiertem Bereich plötzlich endet.

Bei bekannten Konzepten, wie beim europäischen Projekt ActMap, wird davon ausgegangen, dass die digitalen Karten soweit aktualisiert werden, bis eine konsistente Berechnung einer Route möglich ist.

Die nicht vorveröffentlichte DE 10 2006 013 297 offenbart ein Verfahren zum Betrieb eines Navigationssystems, bei welchem Kartendaten aktualisiert werden, wobei die aktualisierten Kartendaten in einem Speicher und dazu noch nicht aktualisierte Kartendaten in einer Sicherheitsspeicher-Ebene gespeichert werden, so dass ggf. darauf zurück gegriffen werden kann. Die Aktualisierung erfolgt mit bidirektionaler Kommunikation, die nicht immer und nicht überall verfügbar ist.

Bei drahtlosen Kommunikationskanälen zur Aktualisierung von digitalen Karten liegt jedoch keine hundertprozentige Verfügbarkeit vor, so dass bei mangelnder Verfügbarkeit eines Kommunikationskanals eine Aktualisierung der digitalen Karte nicht in dem benötigten Umfang möglich ist, so dass eine Berechnung einer solchen Route dadurch unmöglich oder problematisch sein könnte.

Aus der EP 1 785 968 A1 ist ein Verfahren zum Betrieb eines Navigationssystems mit einer Datenempfangsvorrichtung und einem Speicher bekannt, wobei in dem Speicher Kartendaten einer Karte abgespeichert sind und bei Empfang von aktualisierten Kartendaten diese in den Speicher übernommen werden, wobei die Kartendaten hierarchisch organisiert sind und den Kartendaten eine Information bezüglich der Aktualisierungsversion der Kartendaten zugeordnet wird.

### Darstellung der Erfindung: Aufgabe, Lösung, Vorteile

Aufgabe der Erfindung ist es, ein Verfahren zum Betrieb eines Navigationssystems und ein Vorrichtung zu schaffen, welches bzw. welche gegenüber dem Stand der Technik verbessert ist und eine Verbesserung bezüglich der Aktualisierung von Daten erlaubt.

Erfindungsgemäß wird die Aufgabe bezüglich des Verfahrens gelöst mit den Merkmalen von Anspruch 1 und bezüglich der Vorrichtung mit den Merkmalen von Anspruch 3.

Bezüglich des Verfahrens wird dies erreicht durch ein Verfahren zum Betrieb eines Navigationssystems mit einer Datenempfangsvorrichtung und einem Speicher, wobei in dem Speicher Kartendaten einer Karte abgespeichert sind und bei Empfang von aktualisierten Kartendaten diese in den Speicher übernommen werden, wobei die Kartendaten hierarchisch organisiert sind und den Kartendaten eine Information zugeordnet wird bezüglich der Aktualisierungsversion der Kartendaten, bei dem vorgesehen ist, dass ein Verfahren zum Betrieb eines Navigationssystems mit einer Datenempfangsvorrichtung und einem Speicher bekannt ist, wobei in dem Speicher Kartendaten einer Karte abgespeichert sind und bei Empfang von aktualisierten Kartendaten diese in den Speicher übernommen werden, wobei die Kartendaten hierarchisch organisiert sind und den Kartendaten eine Information bezüglich der Aktualisierungsversion der Kartendaten zugeordnet wird.

Dabei ist es vorteilhaft, wenn die Kartendaten der Karte in Bereiche, wie in Kacheln, aufgeteilt sind, die hierarchisch strukturiert sind und Kacheln einer unteren Hierarchieebene und Kacheln einer höheren Hierarchieebene vorliegen, wobei eine Mehrzahl von Kacheln einer unteren Hierarchieebene einer Kachel einer höheren Hierarchieebene zugeordnet sind.

Bezüglich der Vorrichtung wird dies erreicht durch eine Vorrichtung, wie beispielsweise ein Navigationssystem, mit einer Datenempfangsvorrichtung und einem Speicher, wobei in dem Speicher Kartendaten einer Karte abspeicherbar sind und bei Empfang von aktualisierten Kartendaten diese in den Speicher übernehmbar sind, wobei die Kartendaten hierarchisch organisierbar sind und den Kartendaten eine Information zuordenbar ist bezüglich der Aktualisierungsversion der Kartendaten und wobei die Vorrichtung geeignet ist zur Durchführung eines obigen Verfahrens.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: schematische Darstellung einer digitalen Karte; und
- Fig. 2: eine schematische Darstellung eines Navigationssystems.

### Bevorzugte Ausführung der Erfindung

Navigationssysteme 100 verwenden beispielsweise digitale Karten zur Berechnung von Routen zum Erreichen eines ausgewählten Zielpunkts ausgehend beispielsweise von einem aktuellen Koordinatenpunkt eines Fahrzeugs in der Karte. Solche Navigationssysteme können jedoch auch von Zweirädern oder Fußgängern benutzt werden. Dazu wird eine Zielkoordinate eingegeben oder definiert und anhand der aktuellen Koordinate bestimmt das Navigationssystem unter Zuhilfenahme einer verfügbaren beispielsweise digitalen Karte die unter gegebenenfalls angegebenen weiteren Randbedingungen geeignetste Route zur Zielkoordinate. Diese Route kann dann mittels einer Zielführung erreicht werden.

Wesentlich dabei ist die Aktualität der verwendeten Karten, damit auf die aktuellsten Straßen bei der Routenberechnung zugegriffen werden kann. Aufgrund ständiger Veränderungen beispielsweise aufgrund von Straßenbau oder anderen verkehrspolitischen Maßnahmen ist es daher vorteilhaft, die im Navigationssystem 100 verwendenden Karten einer regelmäßigen oder bedarfsabhängigen Aktualisierung zu unterziehen.

Die Aktualisierung einer digitalen Karte kann dadurch erfolgen, dass einzelne Straßen repräsentierenden Kanten oder Kreuzungspunkte oder Abzweigungen von Straßen repräsentierende Knoten zumindest bereichsweise aktualisiert werden. Es kann auch vorteilhaft sein, dass die Karte in einzelne Bereiche unterteilt ist und diese Bereiche, vorzugsweise in Form von Kacheln, wie beispielsweise in Form von rechteckigen Kacheln, entsprechend aktualisierbar sind. Insgesamt werden solche aktualisierbaren Daten einer Karte als Kartendaten bezeichnet.

Bei der Aufteilung von Karten in eine Mehrzahl von Bereichen, die im Folgenden als Kacheln bezeichnet werden, können solche Bereiche oder Kacheln eine hierarchische Struktur aufweisen. Dabei können Kacheln auf einer unteren Hierarchieebene in einer darüber liegenden Hierarchieebene zu einer größeren Kachel zusammengefasst sein. Beispielsweise sind in einer unteren Hierarchieebene die Kacheln derart aufgeteilt, dass sie die Karte bzw. die die Karte darstellende Fläche, wie beispielsweise die Erdoberfläche oder einen Ausschnitt davon abdecken, wobei gleiche oder auch unterschiedlich große Kacheln verwendet werden, die sich vorzugsweise an Kanten der Kacheln treffen. Auch könnte eine gewisse Überlappung von Kacheln vorgesehen sein. In einer nächst höheren Hierarchieebene können dann mehrere Kacheln der darunter liegenden Hierarchieebene zusammen gefasst sein.

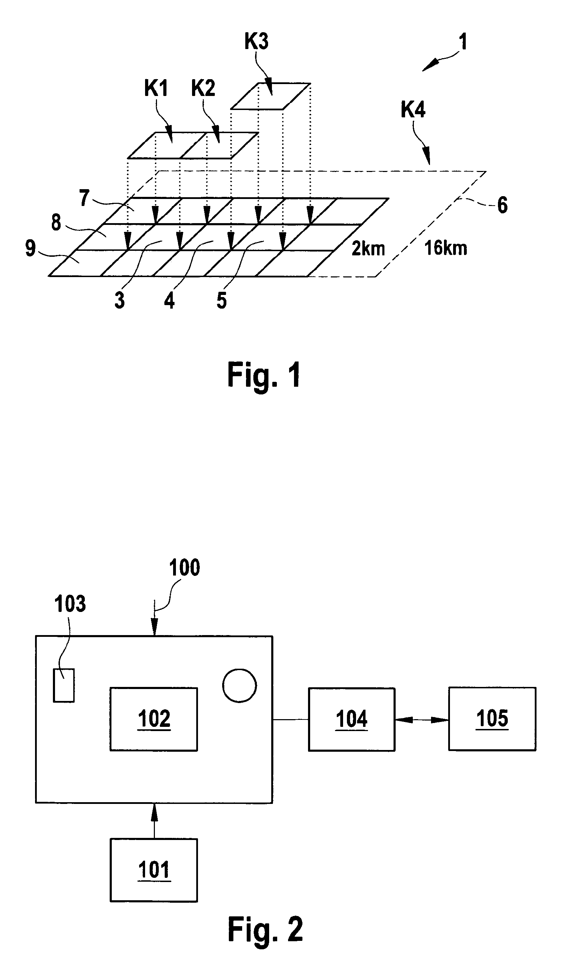

Die Figur 1 zeigt eine digitale Karte 1 bzw. einen Ausschnitt einer Karte 1. Die Karte 1 weist dabei einzelne Bereiche bzw. Kacheln 3,4,5,6,7,8 und 9 auf. Die Kacheln 3,4,5,7,8 und 9 sind dabei Teil einer größeren Kachel 6, die auch mit K4 bezeichnet ist, welche eine Anzahl von kleineren Kacheln umfasst. Die Kachel 6 ist eine Kachel der höheren Hierarchieebene, wobei die Kacheln 3,4,5,7,8,9 Kacheln der unteren Hierarchieebene sind.

Die digitale Karte 1 kann dabei in einer Arbeitsebene und gegebenenfalls auch in einer Sicherheitsspeicher-Ebene vorliegen. Die digitale Karte 1 beispielsweise der Arbeitsebene wird zur Berechnung einer Route und/oder zum Anzeigen einer Karte auf einem Anzeigeelement verwendet, indem die in der Karte vorhandenen Straßen oder Knoten herangezogen werden. Die Arbeitsebene stellt somit eine Speicherebene dar, die für den allgemeinen Betrieb des Navigationssystems aufgerufen wird und woraus Daten abgerufen werden.

Liegt eine Änderung der realen Situation bezüglich der benutzbaren Straßen vor, wie durch Neubau einer Straße oder einen Abriss oder Umbau einer Straße, so wird eine Aktualisierung der digitalen Karte 1 notwendig, in dem der veränderte Bereich oder die veränderte Straße/Kreuzung etc. in die digitale Karte entsprechend übernommen wird.

Die Karte 1 stellt beispielsweise eine Karte dar, welche vollständig aktualisiert ist und in einer Version X vorliegt Im Ausführungsbeispiel der Figur 1 ist die Karte 1 in einer Version 1 verfügbar, wobei alle Kacheln 3,4,5,6,7,8 und 9 dieser Karte 1 in dieser Version 1 vorliegen. Beispielsweise liegt die Version 1 oder die Version X mit Installation der Karte auf einem Navigationsgerät vor oder sie kann auch mit einer Neuinstallation einer digitalen Karte aufgespielt werden. Auch kann eine Version X vorliegen mit einer vollständigen Aktualisierung der Karte.

Wird nun dennoch eine Aktualisierung der Karte nach einer gewissen Zeit notwendig und durchgeführt, wird nicht automatisch die gesamte Karte aktualisiert, sondern es werden nur einzelne Kacheln aktualisiert, die im Zeitpunkt der Aktualisierung notwendig sind oder als solche definiert sind, also die, die beispielsweise für die aktuelle Routenberechnung oder Kartendarstellung auf einem Bildschirm benötigt werden. Auch können einzelne Kacheln in einer Aktualisierung aktualisiert werden und in einer nächsten Aktualisierung erneut aktualisiert werden, wobei auch manche benachbarten Kacheln, die bereits bei der vorhergehenden Aktualisierung aktualisiert wurden, bei dieser nächsten Aktualisierung nicht berücksichtigt werden können.

So ist in Figur 1 zu erkennen, dass die Kacheln 3 und 4 bereits in der Version 3 (K1,K2) vorliegen, also zu einem Zeitpunkt aktualisiert wurden, in welchem die Version 3 der Karte 1 vorlag. Darüber hinaus wurde die Kachel 5 (K3) mit einem Datensatz der Version 4 aktualisiert. Die übrigen Bereiche bzw. Kacheln 7,8,9 der Karte 1 wurden beispielsweise bislang noch nicht aktualisiert.

Dadurch tritt der Zustand ein, dass eine digitale Karte mit Bereichen oder Kacheln 3,4,5,7,8,9 versehen ist oder aus diesen zusammengesetzt ist, die unterschiedlichen Versionen bzw. Aktualisierungsgraden angehören. So ist im Beispiel der Figur 1 die Karte mit den meisten Kacheln 7,8,9 in der Version 1 vorliegend, wobei einzelne Kacheln 3,4 (K1,K2) einer Version 3 und eine andere Kachel 5, (K3) einer Version 4 angehören.

Darüber hinaus ist zu erkennen, dass Kacheln mit unterschiedlicher Hierarchieebenen existieren. So existiert eine Kachel K4, welche aus einer Anzahl N von Kacheln geringerer Größe und unterer Hierarchieebene zusammengesetzt ist. So ist im Ausführungsbeispiel der Figur 1 die Kachel K4, 6 zusammengesetzt aus 24 Kacheln der darunter liegenden Hierarchieebene, wie beispielsweise eine Anordnung von vier Reihen mit jeweils sechs Kacheln. Auch können die Kacheln der höheren Hierarchieebene quadratisch ausgebildet sein und beispielsweise vier mal vier Kacheln der unteren Hierarchieebene aufweisen.

Es ist zu erkennen, dass nicht alle Kacheln 3,4,5,7,8,9 etc. welche sich zu der Kachel K4,6 zusammensetzen auf dem gleichen Aktualisierungsgrad sind. So sind beispielsweise Kacheln der Aktualisierungsversion 1, der Version 3 und der Version 4 in der Kachel K4 vorzufinden.

Dadurch, dass die höchste Aktualisierungsversion die Version 4 ist, mit welcher eine Kachel aktualisiert wurde, die hierarchisch unter der Kachel K4,6 zugeordnet ist, wird der Kachel K4,6 ebenso die Version 4 zugeordnet.

Damit dennoch erkennbar ist, welche der hierarchisch untergeordneten Kacheln auf der höchsten Aktualisierungsversion 4 sind, wird dieser Kachel bzw. diesen Kacheln ein Zeichen oder ein Suffix oder eine Information zugeordnet, wie beispielsweise ein Dateiflag, welches anzeigt, ob die hierarchisch untergeordnete Kachel die Version der hierarchisch höher geordneten Kachel aufweist. Liegt dies vor, wird das Flag gesetzt anderenfalls nicht.

So trägt die hierarchisch höher eingestufte Kachel immer die Versionskennung der höchsten Version einer ihrer hierarchisch untergeordneten Kacheln.

Bei einer vollständigen Aktualisierung der Karte oder einer hierarchisch höher geordneten Kachel werden alle hierarchisch untergeordneten Kacheln auf das gleiche Aktualisierungsniveau der gleichen Version gehoben und alle Flags oder Zeichen der Versionsangabe werden gelöscht.

Auch könnten die Kacheln grundsätzlich eine Dateninformation über die Aktualisierungsversion aufweisen. Dies hätte jedoch einen höheren Speicherbedarf zur Folge.

Die Figur 2 zeigt ein Navigationssystem 100 in schematischer Darstellung mit einem Speicher 101, einem Anzeigeelement 102 und zumindest einem Bedienelement 103. Das Navigationssystem 100 vermag Kartendarstellungen auf dem Anzeigeelement 102 darzustellen, wobei berechnete Routen in einer Kartedarstellung anzeigbar sind. Weiterhin verfügt das Navigationssystem 100 über eine Datenempfangsvorrichtung 104. Diese Datenempfangsvorrichtung kann mit einem Sender 105, wie Datenserver, zusammenwirken, wodurch die von dem Sender ausgesandten Signale empfangen und weiter verarbeitet werden können. Solche Signale können beispielsweise Kartendaten sein. Als Datenempfangsvorrichtung kann auch eine Telefonkommunikationsvorrichtung oder ähnliches verwendet werden.

Das Navigationssystem 100 hat eine digitale Karte 1 in seinem Speicher 101 abgespeichert, auf deren Basis beispielsweise Routenvorschläge auf Arbeitsebene bestimmt werden. Über die Datenempfangsvorrichtung 104 ist das Navigationssystem 100 in der Lage Kartendaten oder Bereiche oder Kacheln von Karten in aktualisierter Form zu empfangen, wobei diese empfangenen Kartendaten solche der bereits abgespeicherten digitalen Karte 1 ersetzen können.

## Patentansprüche

1. Verfahren zum Betrieb eines Navigationssystems (100) mit einer Datenempfangsvorrichtung (104) und einem Speicher (101), wobei in dem Speicher (101) Kartendaten einer Karte (1) abgespeichert sind und bei Empfang von aktualisierten Kartendaten diese in den Speicher übernommen werden, **dadurch gekennzeichnet, dass** die Kartendaten hierarchisch organisiert sind und den Kartendaten eine Information zugeordnet wird bezüglich der Aktualisierungsversion der Kartendaten, **dadurch gekennzeichnet**,
a) bei einer Aktualisierung von Kartendaten zumindest einer Kachel (3,4,5,7,8,9) in einer unteren Hierarchieebene die Kachel (6) einer höheren Hierarchieebene die Information bezüglich der höchsten bzw. neuesten Aktualisierungsversion der Kartendaten erhält, mittels welcher zumindest eine Kachel der unteren Hierarchieebene aktualisiert wurde, wobei die zumindest eine Kachel der unteren Ebene eine Information erhält, ob sie auf die Aktualisierungsversion der Kachel der höheren Ebene aktualisiert ist oder nicht, oder
b) dass bei einer Aktualisierung von Kartendaten einer Kachel (3,4,5,7,8,9) in einer unteren Hierarchieebene die Kachel (6) der höheren Hierarchieebene die Information bezüglich der Aktualisierungsversion der Kartendaten erhält, mittels welcher die Kachel der unteren Hierarchieebene aktualisiert wurde, wobei die aktualisierte Kachel der unteren Ebene eine Information erhält, dass sie auf die Aktualisierungsversion der Kachel der höheren Ebene aktualisiert wurde.

2. Verfahren nach Anspruch 1, **dadurch gekennzeichnet, dass** die Kartendaten der Karte (1) in Bereiche, wie Kacheln (3,4,5,6,7,8,9), aufgeteilt sind, die hierarchisch strukturiert sind und Kacheln (3,4,5,7,8,9) einer unteren Hierarchieebene und Kacheln (6) einer höheren Hierarchieebene vorliegen, wobei eine Mehrzahl von Kacheln einer unteren Hierarchieebene einer Kachel einer höheren Hierarchieebene zugeordnet sind.

3. Vorrichtung, wie Navigationssystem (100), zur Durchführung eines Verfahrens der vorhergehenden Ansprüche, mit einer Datenempfangsvorrichtung (104) und einem Speicher (101), wobei in dem Speicher (101) Kartendaten einer Karte (1) abspeicherbar sind und bei Empfang von aktualisierten Kartendaten diese in den Speicher übernehmbar sind, **dadurch gekennzeichnet, dass** die Kartendaten hierarchisch organisierbar sind und den Kartendaten eine Information zuordenbar ist bezüglich der Aktualisierungsversion der Kartendaten.

## Claims

1. Method for operating a navigation system (100) having a data reception apparatus (104) and a memory (101), wherein the memory (101) stores map data from a map (1), and, when updated map data are received, said updated map data are transferred to the memory, **characterized in that** the map data are organized in a hierarchy and the map data are assigned a piece of information regarding the update version of the map data, wherein
a) when map data from at least one tile (3, 4, 5, 7, 8, 9) on a lower hierarchy level are updated, the tile (6) on a higher hierarchy level is provided with the information regarding the highest or most recent update version of the map data which has been used to update at least one tile on the lower hierarchy level, wherein the at least one tile on the lower level is provided with a piece of information concerning whether or not it has been updated to the update version of the tile on the higher level, or
b) when map data from a tile (3, 4, 5, 7, 8, 9) on a lower hierarchy level are updated, the tile (6) on the higher hierarchy level is provided with the information regarding the update version of the map data which has been used to update the tile on the lower hierarchy level, wherein the updated tile on the lower level is provided with a piece of information indicating that it has been updated to the update version of the tile on the higher level.

2. Method according to Claim 1, **characterized in that** the map data from the map (1) are split into regions, such as tiles (3, 4, 5, 6, 7, 8, 9), which are hierarchically structured, and tiles (3, 4, 5, 7, 8, 9) on a lower hierarchy level and tiles (6) on a higher hierarchy level are present, wherein a plurality of tiles on a lower hierarchy level are associated with a tile on a higher hierarchy level.

3. Apparatus, such as a navigation system (100), for carrying out a method from the preceding claims, having a data reception apparatus (104) and a memory (101), wherein the memory (101) can be used to store map data from a map (1), and, when updated map data are received, said updated map data can be transferred to the memory, **characterized in that** the map data can be organized in a hierarchy and the map data can be assigned a piece of information regarding the update version of the map data.

## Revendications

1. Procédé d'utilisation d'un système de navigation (100) doté d'un dispositif (104) de réception de données et d'une mémoire (101),
des données cartographiques d'une carte (1) étant conservées dans la mémoire (101) et lors de la réception de données cartographiques mises à jour, ces données cartographiques étant transférées dans la mémoire,
**caractérisé en ce que**
les données cartographiques sont organisées hiérarchiquement et une information concernant la version de la mise à jour des données cartographiques étant associée aux données cartographiques,
dans lequel,
a) en cas de mise à jour de données cartographiques d'au moins un pavé (3, 4, 5, 7, 8, 9) d'un plan hiérarchique inférieur, le pavé (6) d'un plan hiérarchique supérieur reçoit l'information concernant la version la plus élevée ou la plus récente des données cartographiques au moyen de laquelle au moins un pavé du plan hiérarchique inférieur a été mis à jour, le ou les pavés du plan inférieur recevant une information indiquant s'il a été mis à jour à la version mise à jour du pavé du plan supérieur ou
b) **en ce qu'**en cas de mise à jour de données cartographiques d'un pavé (3, 4, 5, 7, 8, 9) d'un plan hiérarchique inférieur, le pavé (6) du plan hiérarchique supérieur reçoit l'information concernant la version mise à jour des données cartographiques au moyen de laquelle le pavé du plan hiérarchique inférieur a été mis à jour, le pavé mis à jour du plan inférieur contenant une information indiquant qu'il a été mis à jour à la version mise à jour du pavé du plan supérieur.

2. Procédé selon la revendication 1, **caractérisé en ce que** les données cartographiques de la carte (1) sont divisées en parties structurées hiérarchiquement, par exemple des pavés (3, 4, 5, 6, 7, 8, 9), avec coexistence de pavés (3, 4, 5, 7, 8, 9) d'un plan hiérarchique inférieur et de pavés (6) d'un plan hiérarchique supérieur, plusieurs pavés d'un plan hiérarchique inférieur étant associés à un pavé d'un plan hiérarchique supérieur.

3. Dispositif, par exemple système de navigation (100), en vue de la mise en oeuvre d'un procédé selon les revendications précédentes, doté d'un dispositif de réception de données (104) et d'une mémoire (101), des données cartographiques d'une carte (1) pouvant être conservées dans la mémoire (101) et lors de la réception de données cartographiques mises à jour, ces données cartographiques pouvant être transférées dans la mémoire,
**caractérisé en ce que**
les données cartographiques peuvent être organisées hiérarchiquement et une information concernant la version mise à jour des données cartographiques peut être associée aux données cartographiques.
